# EUROPEAN PATENT SPECIFICATION

(11) **EP 1 525 135 B1**
(45) Date of publication and mention of the grant of the patent: **26.11.2008**
(21) Application number: 03738271.0
(22) Date of filing: 06.06.2003
(51) Int. Cl.: B62M 7/00, B62M 7/02, B62K 11/04, B62K 19/32

(54) **MOTORCYCLE ENGINE**
MOTORRADMOTOR
MOTEUR DE MOTOCYCLE

(30) Priority: 07.06.2002 GB 0213123; 07.06.2002 GB 0213136; 07.06.2002 GB 0213120; 07.06.2002 GB 0213118; 11.06.2002 GB 0213370; 24.07.2002 GB 0217153; 24.01.2003 GB 0301704
(43) Date of publication of application: 27.04.2005
(73) Proprietor: Brumby Corporation Limited, Douglas, Isle of Man IM1 2BF (GB)
(72) Inventor: SUTER, Eskil, Srt Suter Racing Technology AG, CH-8488 Turbenthal (CH); SUTER, Simon, Srt Suter Racing Technology AG, CH-8488 Turbenthal (CH); GIUSSANI, A., Srt Suter Racing Technology AG, CH-8488 Turbenthal (CH); JANN, Urs, Suter Racing Technology AG, CH-8488 Turbenthal (CH); WOOD, Benny, London SW18 5RD (GB); MATHEWSON, Robert, Foggy Petronas Racing, Unit 1, Burton-Upon-Trent DE13 0BY (GB); THOMPSON, Stephen, Foggy Petronas Racing, Unit 1, Burton-Upon-Trent DE13 0BY (GB)
(74) Representative: Jones, John Bryn
(86) International application number: PCT/GB2003/002478
(87) International publication number: WO 2003/104075

(56) References cited:
- EP-A- 0 448 728
- PATENT ABSTRACTS OF JAPAN vol. 2000, no. 17, 5 June 2001 (2001-06-05) -& JP 01 115795 A (SUZUKI MOTOR CO LTD), 9 May 1989 (1989-05-09)
- PATENT ABSTRACTS OF JAPAN vol. 018, no. 207 (M-1592), 13 April 1994 (1994-04-13) -& JP 06 008873 A (SUZUKI MOTOR CORP), 18 January 1994 (1994-01-18)
- PATENT ABSTRACTS OF JAPAN vol. 014, no. 247 (M-0978), 25 May 1990 (1990-05-25) -& JP 02 067417 A (YAMAHA MOTOR CO LTD), 7 March 1990 (1990-03-07)
- PATENT ABSTRACTS OF JAPAN vol. 2000, no. 20, 10 July 2001 (2001-07-10) -& JP 2001 071968 A (HONDA MOTOR CO LTD), 21 March 2001 (2001-03-21)

## Description

The present invention relates to gas flow management in a motorcycle, especially a high performance motorcycle. In particular, the invention relates to an intake path and an exhaust path in such a motorcycle.

It is known in the field of performance motorcycles to provide a ram-air intake which provides air to the combustion chamber of the engine under pressure. However, known systems suffer from disadvantages that they do not recover pressure efficiently. They also impose constraints on the positioning of the engine in the motorcycle. It is also known in performance motorcycles to provide exhausts which are tuned (in that they have an optimum length). However, known exhausts suffer from the disadvantage that they have a negative impact on the streamlining of the motorcycle.

It is an aim of the invention to alleviate some of these problems.

In accordance with the invention there is provided a motorcycle having an air intake path according claim 1.

The provision of air to an airbox via a substantially linear path and subsequently to an engine having only one cylinder or only one bank of cylinders via a front-mounted air intake may allow an improved ram-air effect (i.e. pressure delivered to the combustion chamber), resulting in higher peak power from the engine, while affording greater flexibility in the positioning of the centre of gravity of the engine in the motorcycle. Moreover, the effective "reversal" of the cylinder head (i.e. having inlets towards the front and exhaust towards the rear) maintains a degree of physical separation between the inlets and the exhaust pipes, which may result in less heat transfer between the exhaust pipes and air in the intake path, in resulting in a denser charge being delivered to the combustion chamber.

Preferably, if there is more than one cylinder, they are arranged "in-line". There may be a separate air intake for each cylinder.

Preferably, the longitudinal axis of the or each cylinder is inclined towards the rear of the motorcycle. For example, the axis may be inclined rearwards by between 10° and 25°, or more preferably by between 13° and 15°.

Rearward inclination of the cylinders enables the mass of the crankcase (and contents) of the engine to be brought forwards, which may improve handling of the motorcycle, particularly under acceleration, while allowing volume for a large airbox in front of the cylinder block of the engine, which may result in a larger, more stagnant volume of air being available for the engine, particularly at lower speeds, resulting in a smoother power curve and throttle response.

Preferably, the intake path comprises a convergent portion adjacent an upstream end of the path. This convergent portion may result in a more uniform flow (and less turbulent) of air along the intake path.

The intake path preferably comprises a divergent portion, preferably downstream of a convergent portion. This may increase the efficiency of pressure recovery in the airbox.

The divergent portion may diverges with an equivalent cone angle of 7° . Such an angle of divergence may serve to maximise pressure recovery at the airbox.

Preferably, the intake path passes through a headstock of the motorcycle, which is preferably divergent. This may allow for a more linear path to the airbox, which may also result in more efficient pressure recovery.

Where the intake path passes through the headstock, the headstock preferably comprises a streamlined fairing around a steering pin of the motorcycle. The provision of such a fairing may reduce turbulence in the airflow, resulting in a smoother throttle response from the engine.

The aperture is preferably located at a point of highest incident pressure when the motorcycle is in substantially linear motion since taking air from this point may result in a higher pressure in the airbox, resulting in higher peak power from the engine.

The airbox preferably has a volume of at least 12 litres, although volumes of greater than 5 litres, 7.5 litres or 10 litres may be provided.

The motorcycle preferably further comprises an exhaust header per cylinder of the engine, mounted on a substantially rearward-facing surface of the engine, the header feeding an exhaust duct which runs from the engine to a muffler, the exhaust duct being located for substantially the whole of its length adjacent a seat of the motorcycle.

The routing of the exhaust duct in close proximity to the seat of the motorcycle may result in a smaller "wetted" area of the motorcycle, resulting in less longitudinal drag. It may also reduce the profile area of the motorcycle and result in less lateral drag in cross-winds.

This important feature may also be provided independently.

The muffler is preferably mounted in a tail portion of the motorcycle to the rear of the seat; this may further reduce drag.

Preferably; the engine comprises a plurality of cylinders, each feeding respective exhaust headers and exhaust primary pipes forming part of the exhaust duct, the exhaust primary pipes all being located for substantially the whole of their length adjacent the seat-bearing member.

The exhaust duct preferably then comprises a secondary pipe upstream of the muffler, the primary pipes converging into the secondary pipe.

The motorcycle preferably comprises a plurality of mufflers, each of which is mounted in the tail portion of the motorcycle, the exhaust duct diverging into a respective tertiary pipe feeding each of the mufflers.

In such cases, the exhaust duct preferably extends to a position between at least two of the mufflers, before doubling back towards the front of the motorcycle; this may allow sufficient length to enable the exhaust pipe to be correctly tuned.

### Introduction to drawings

Specific embodiments will now be described, by way of example only, with reference to the accompanying drawings, in which:
Figures 1 and 2 show a motorcycle with body panels respectively fitted and removed;
Figures 3, 4 and 5 are respectively side, front and rear elevations of the engine in the motorcycle shown in Figures 1 and 2;
Figures 6 and 7 are perspective views of the chassis of the motorcycle shown in Figures 1 and 2, showing an intake duct, air filter and airbox.
Figure 8 is a plan view of the motorcycle shown in Figures 1 and 2, with the fuel tank and a heat sink removed;
Figure 9 shows successive cross-sections of an intake path of the motorcycle shown in Figures 1 and 2;
Figure 10 shows a steering pin of the motorcycle shown in Figure 1 and 2, including a fairing around the pin;
Figure 11 is a front view of the chassis shown in Figures 6 and 7 with the duct and airbox removed, and showing the location of the steering pin fairing;
Figure 12 is a cross-section through the cylinder head of the engine shown in Figures 3 to 5;
Figure 13 is a perspective view of the exhaust system of the motorcycle shown in Figures 1 and 2;
Figure 13A is a perspective view of the primary exhaust pipes of the exhaust system shown in Figure 13;
Figure 14 is a perspective view of the secondary exhaust pipe, the mufflers and the end pipes of the exhaust system shown in Figure 13;
Figure 15 is a schematic representation of the exhaust system shown in Figure 13;
Figure 16 is a schematic representation of a second exhaust system having only one muffler;
Figure 17 is a rear view of a tail portion of the motorcycle shown in Figures 1 and 2, having the exhaust system shown in Figure 13, and showing the location of the mufflers;
Figure 18 is an underside view of the tail portion shown in Figure 17; and
Figure 19 shows the exhaust system of Figure 13 in situ in a motorcycle.

### Intake

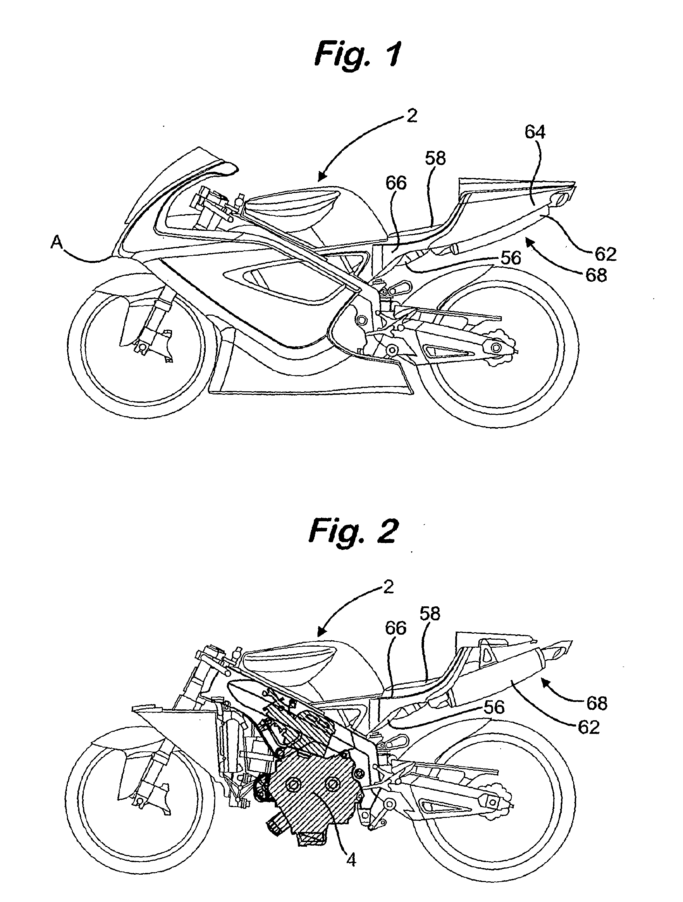

Figures 1 and 2 show a motorcycle with fairings fitted and removed, respectively. In Figure 2, the location and attitude of the engine 4 of the motorcycle is emphasised. It is clear with reference to Figure 2 that, in comparison with the generally accepted convention, the engine 4 has a "reversed" cylinder head. That is to say that the intake apertures of the engine 4 (to which the throttle bodies and intake trumpets visible in Figure 2 are fitted) face the front of the motorcycle whilst the exhaust ports (not visible in this Figure) face rearwards.

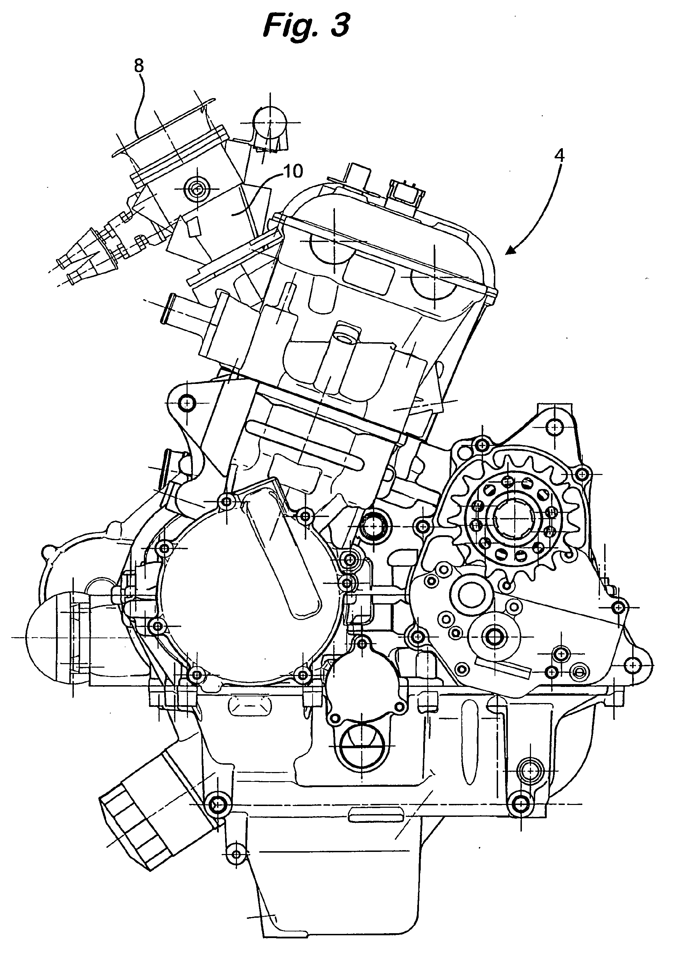

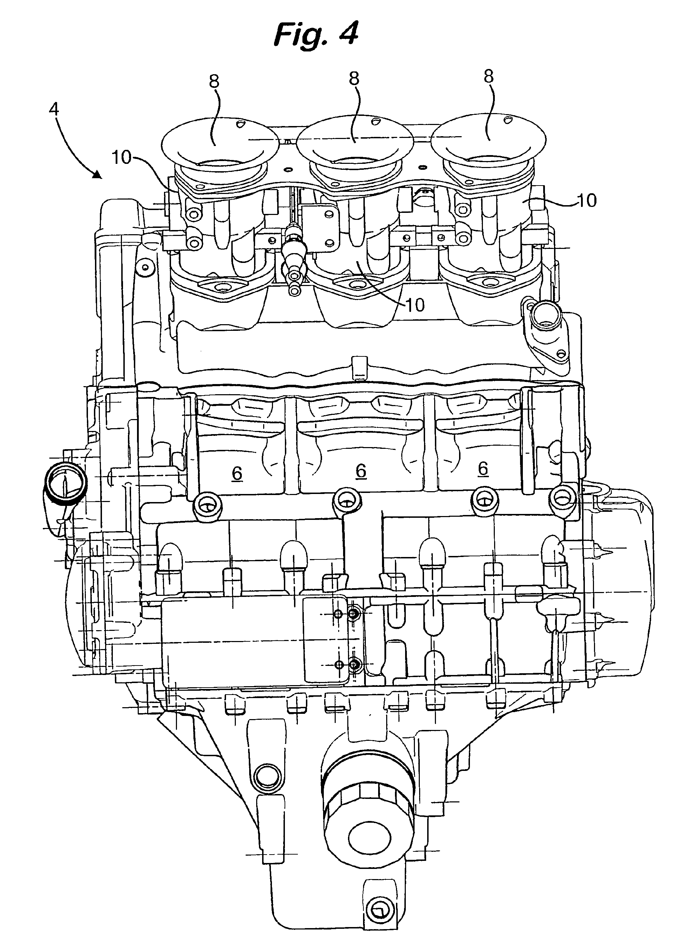

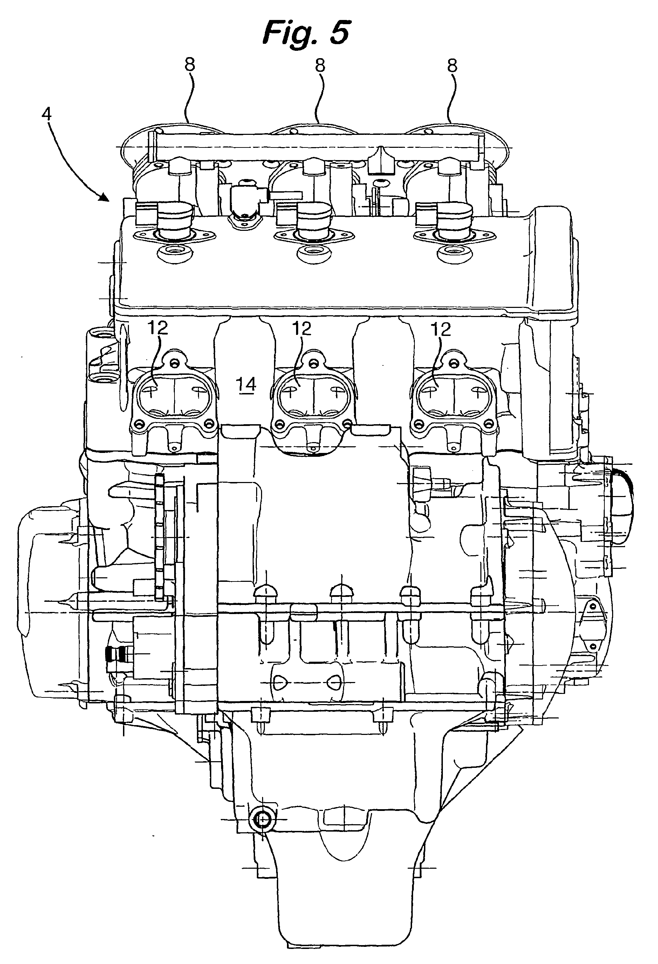

Figures 3, 4 and 5 show the engine 4 in more detail. The engine has three cylinders 6 in an in-line configuration, each cylinder being provided with a fuel/air mixture by respective intake trumpets 8 and throttle bodies 10. Exhaust apertures 12 are provided in a generally rear facing surface of the engine 14, to which exhaust primary pipes are connected when the engine is installed in a motorcycle. As may best be seen in Figure 3, the cylinders 6 are inclined rearwards at an angle of 15° to the vertical and the intake trumpets 8 point generally upwards.

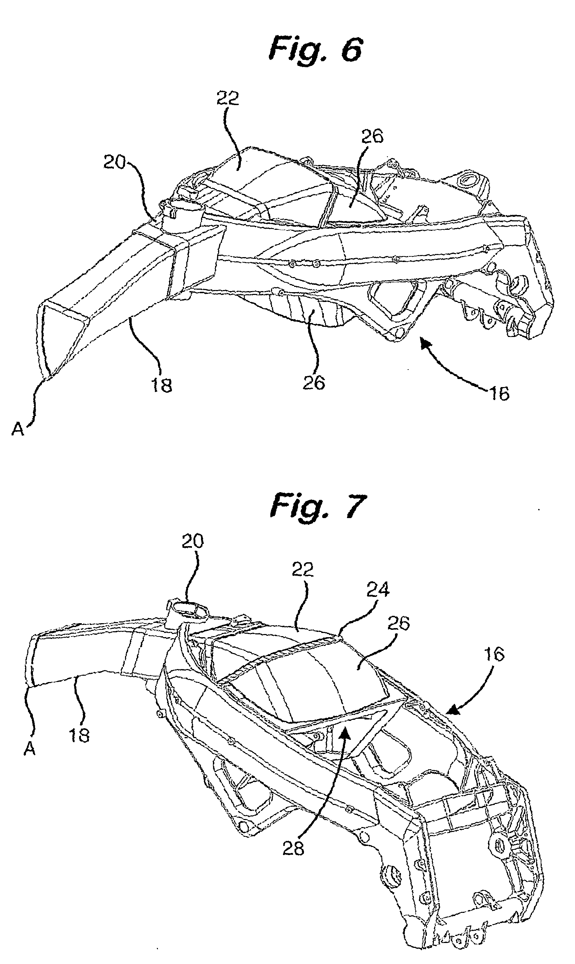

Figures 6 and 7 are perspective views of the chassis 16 of the motorcycle shown in Figures 1 and 2, into which the engine 4 is mounted. An air intake duct 18 extends forwards from the front of the chassis. At its rear end, the intake duct 18 is sealed against the front (or upstream end) of the headstock 20 of the chassis. A passage is formed in the headstock, such that air passing along the intake duct 18 may continue through the headstock. Downstream of the headstock, air enters a short portion 22 of further duct before reaching an air filter 24 (see Figure 7), which forms the entrance to a plenum chamber or airbox 26.

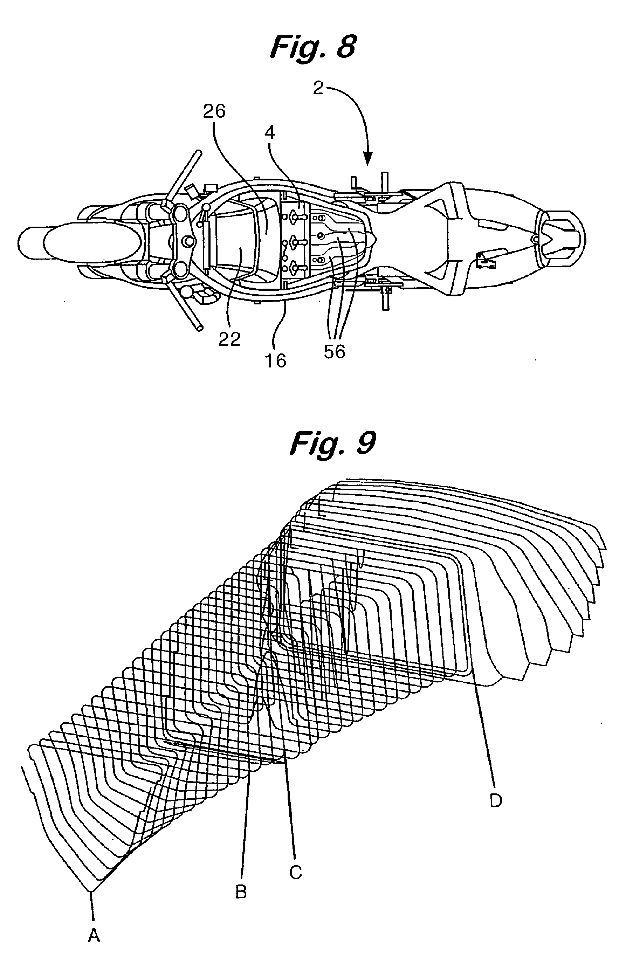

Turning to Figure 8, when both the engine 4 and the airbox 26 are mounted in the chassis 16, the engine sits against an aperture 28 in the airbox, and the intake trumpets 8 of the engine protrude into the airbox volume. The aperture 28 is sealed around the trumpets such that air may not escape from the airbox via the aperture 28 except through one of the trumpets 8.

Considering the intake passage in more detail with reference to Figures 1, 6, 7 and 9, the leading, open end A of the intake duct 18 is situated at the frontmost point of a front fairing 30 of the motorcycle 2, that is the point of the motorcycle at which, when the motorcycle is in generally forward motion, air pressure is greatest. Since the front fairing 30 of the motorcycle retreats upwards and rearwards from the frontmost point (in order to reduce drag), and in order to minimise undesirable drag in cross-winds, the open end of the duct is substantially triangular (see Figure 9). However, the cross-section of the duct changes gradually to be substantially rectangular at point B (in Figure 9) shortly before it meets the headstock. During this transition from a generally triangular to a generally rectangular cross-section, the cross-sectional area of the duct reduces slightly from an area of 8700mm² at the frontmost point A in order to make more uniform the flow of air. At point B, the cross-sectional area begins to increase with an equivalent cone angle of approximately 7° (i.e. around the theoretical optimum angle for recovery of pressure) such that the cross-sectional area at point C (200mm from point A), where the duct meets the headstock, is 9000mm²

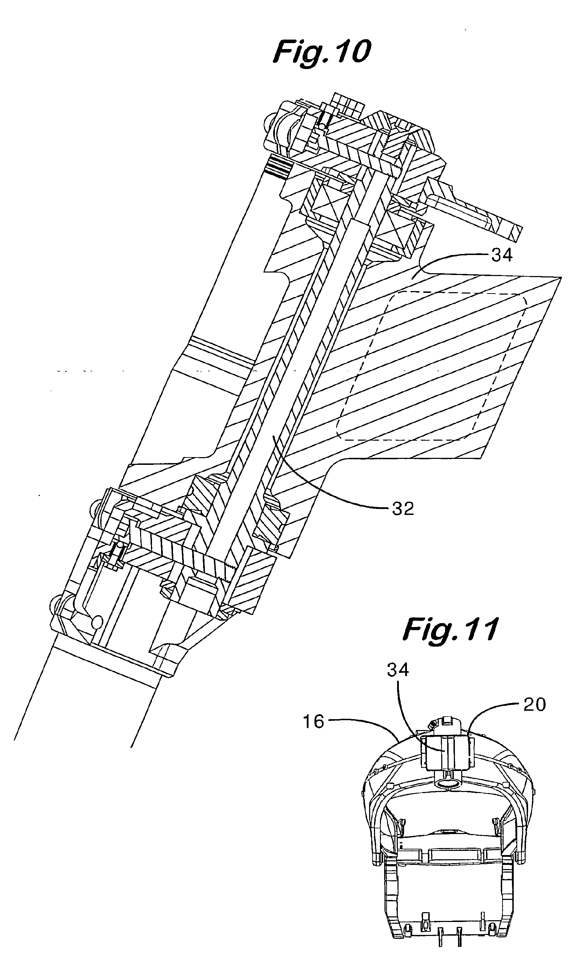

With reference to Figure 9, the headstock 20 extends from point C to point D and has a passage of a generally rectangular cross-section between its front and rear surfaces. This passage defines part of the air flow path from the frontmost point A to the airbox 26. The steering spindle 32 (see figure 10) of the motorcycle passes through the headstock 20 from top to bottom and a fairing 34 having an streamlined cross-section is provided around the spindle to minimise the disruption caused by the spindle to the air flow through the headstock. Figure 11 is a front view of the chassis 16 showing the passage through the headstock 20, and in which the fairing 34 around the steering pin is visible.

As indicated above, the upstream end (point C) of the headstock has a cross-sectional area of 9000mm², and the downstream end (400mm from point A) has a cross-sectional area of 16000mm². Thus the headstock itself forms a diffuser also having a cone angle of approximately 7° (in further embodiments, the intake path between points B to D is a diffuser having a cone angle of between 5° and 10°).

Immediately downstream of the headstock, air passes into a rapid expansion portion 22 of duct in which the cross-sectional area increases from 16000mm² at point D to 40000mm² at point E where it meets the air filter 24 (140mm downstream of point D). The air filter 24 (an oil-soaked, pleated surgical cotton gauze filter mounted in an aluminium mesh frame) marks the entrance to the airbox 26. At the entrance to the airbox 26, there is a sudden large increase in cross-sectional area, and the air filter 24 serves to reduce the formation of eddies and turbulent flow at this point.

The generally steady divergence of the intake duct from point B to point D increases the pressure of the air which is delivered to the airbox, resulting in a strong ram-air effect; which increases the peak power of the engine.

The airbox has a volume of 12 litres. This relatively large volume, in conjunction with the slow air flow within the plenum chamber helps to ensure that the air delivered to the engine is at a relatively constant pressure, ensuring that the power curve of the engine is relatively smooth.

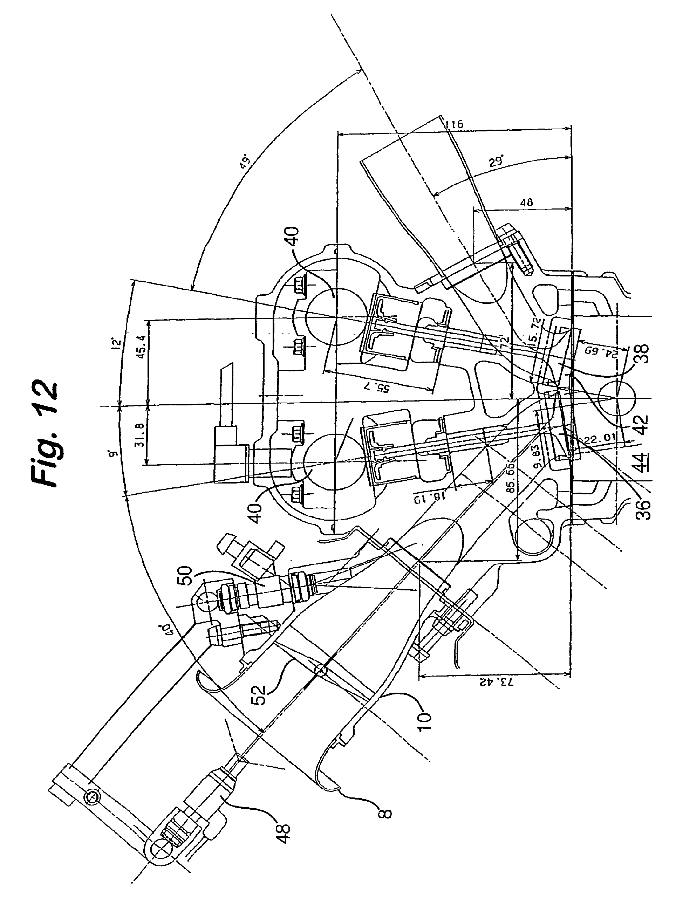

Figure 12 shows a cross-section through a cylinder of the engine shown in Figures 3 to 5, showing a single inlet valve 36 and a single exhaust valve 38 (although a preferred embodiment has two inlet and two exhaust valves per cylinder) driven by dual overhead camshafts40, the combustion chamber 42 and piston 44, the throttle body 10 and intake trumpet 8, and the exhaust header 46. Also visible are an upper and a lower injector 48, 50 respectively, the upper injector being positions co-axially with the throttle body, and the lower injector being disposed in a wall of the throttle body, downstream of the butterfly 52 and angled such that it directs fuel in a generally downstream direction. Each of the injectors is fed by a fuel rail 54, for example as also provided by Magneti Marelli. Further embodiments (for example, motorcycles intended primarily for road use) comprise a single injector (below the butterfly) per cylinder.

The axis of the trumpet and the throttle body is disposed at an angle of 49° from the axis of the respective cylinder. Disposed between those axes, at an angle of 9° from the axis of the cylinder, is the inlet valve (for example, a standard inlet valve as provided by Dell West - a particularly preferred embodiment further uses valve plates made by Dell West and/or valve springs - preferably coil valve springs - made by Kurt Kauffmann GmbH). In a particularly preferred embodiment, intended for racing, the valves are formed from titanium. The two inlet valves for each cylinder are in a parallel configuration.

On the exhaust side of the cylinder head, the axis of the exhaust valve is disposed at an angle of 12° to the axis of the cylinder. The axis of the cylinder is disposed at 61 ° from the axis of the exhaust port. The two exhaust valves for each cylinder are in a parallel configuration.

Other dimensions of this specific embodiment, which is asymmetric, are shown in Figure 12: for example, the radial distances of the axes of the inlet and outlet camshafts from the axis of the cylinder (31.8mm and 45.4mm respectively), the distances parallel to the axis of the cylinder of the centre of the inlet apertures and the outlet apertures from the lowest point of the closed valves 36, 38 (73.42mm and 48mm respectively), the radial distances between the gudgeon pin (when the piston is at top dead centre) and the axes of the inlet and exhaust valves 36, 38 (9.83mm and 15.72mm respectively).

Note that preferred embodiments (such as that shown) comprise two inlet and two exhaust valves per cylinder, and that in the discussion of the position of the valves above, references to the axes of the valves shall be taken to mean a projection of the axes normally onto the plane defined, for example, by the axes of the respective cylinder and the respective throttle body.

The valves 36, 38 are driven via tappets by dual overhead camshafts 40 which are themselves driven by gears from the crankshaft of the engine (not shown).

The faces of the valves 36, 38, a portion of the cylinder head, the piston crown and the cylinder sleeve together define a generally combustion chamber 42 which communicates with the inlet and exhaust ports via the respective valves, when opened. In a preferred embodiment, the combustion chamber is generally hemispherical. In further embodiments, the combustion chamber is generally in the form of a part of a cylinder. In a particularly preferred embodiment, the spark plug is disposed centrally with regard to the roof of the combustion chamber.

### Exhaust

As indicated above and as shown in Figure 2, the cylinder head of the engine is effectively "reversed" such that the exhaust apertures to which exhaust headers are attached are situated on a generally rearwards facing surface of the engine. Three primary exhaust pipes extends from the exhaust apertures and then closely follow the underside of the seat 58 (see Figure 1) before being brought together to form a single secondary pipe 60 which in turn forks into two before entering the mufflers 62. The mufflers are shaped so that in combination with the rear fairing 64, they form a sleek uncluttered aerodynamic subassembly.

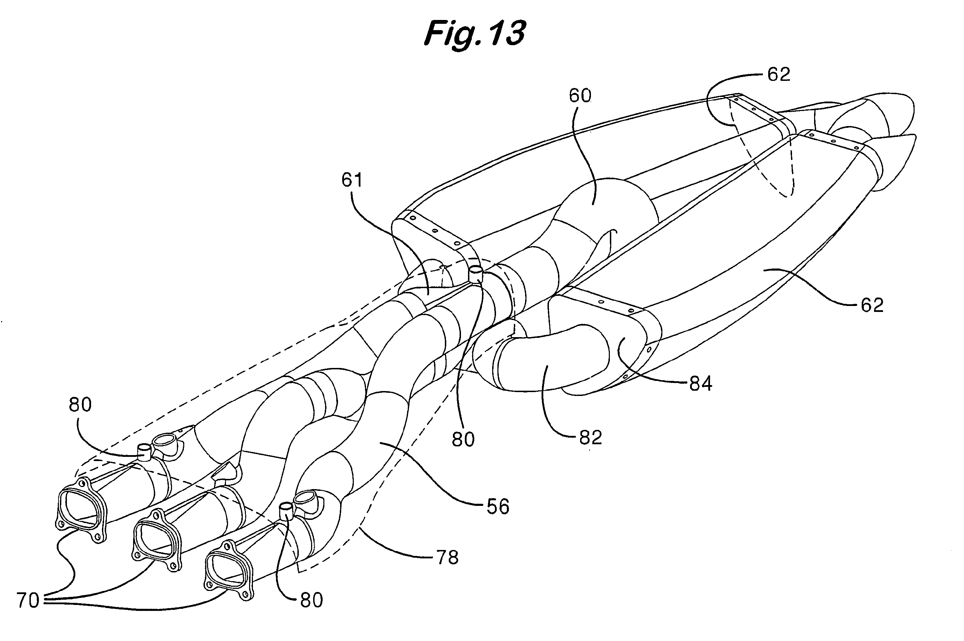

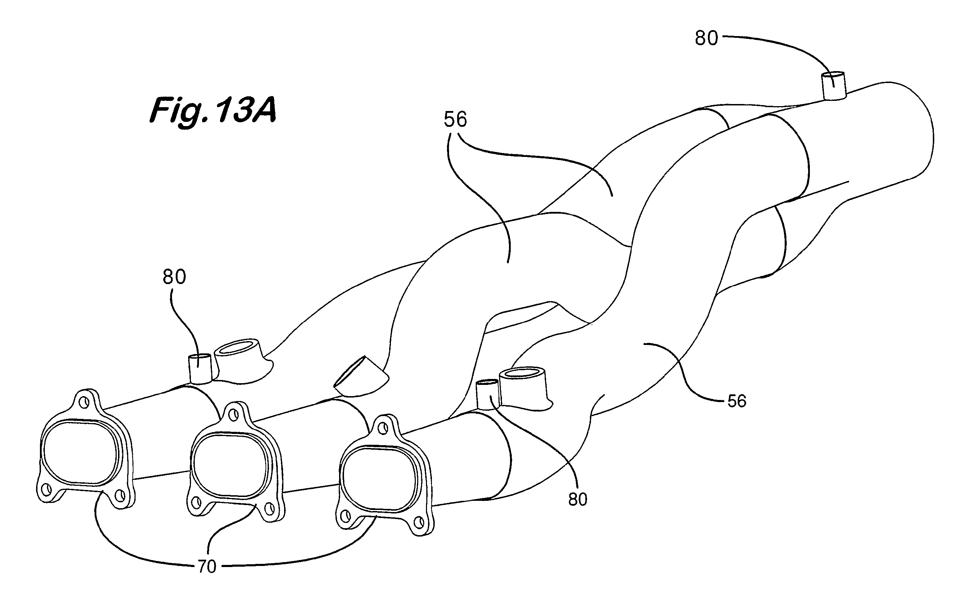

The exhaust system is shown in more detail in Figures 13 to 18 of the drawings. The exhaust system is mounted to a seat bearing member 66 of the motorcycle. The seat bearing member is manufactured as a one-piece carbon-fibre composite member which is mounted directly to the chassis 16 of the motorcycle.

The tail end of the exhaust system is mounted to a rear tail portion 68 of the seat bearing member 66 by means of a pair of mounting brackets (not shown) which depend downwardly from the tail portion 68 and which are connected to the upper surface of each of a pair of mufflers 62.

As shown in Figures 8 and 13, the exhaust system comprises three separate exhaust primary pipes 56, each connected to exhaust outlet ports of respective cylinders of the engine 4, which is an in-line three cylinder engine.

Due to the "reversed" cylinder head of the engine 4, the exhaust primaries 56 emerge from the rear face of the engine 4, between spars of the seat bearing member 66. Each of three primary exhaust pipes 56 flows upwardly from the engine 4 directly to the rear of the motorcycle 2, and each is partly enclosed within the seat bearing member 66, as shown in Figures 1 and 2, for example.

As can be seen in particular in Figures 13 and 13A, the primary exhaust pipes 56 follow a convoluted or serpentine path from the engine towards a "three-into-one" collector or secondary pipe 60, which brings the primary exhaust pipes together. The individual primary pipes 56 are shaped to be accommodated in the area defined within the seat-bearing member 66.

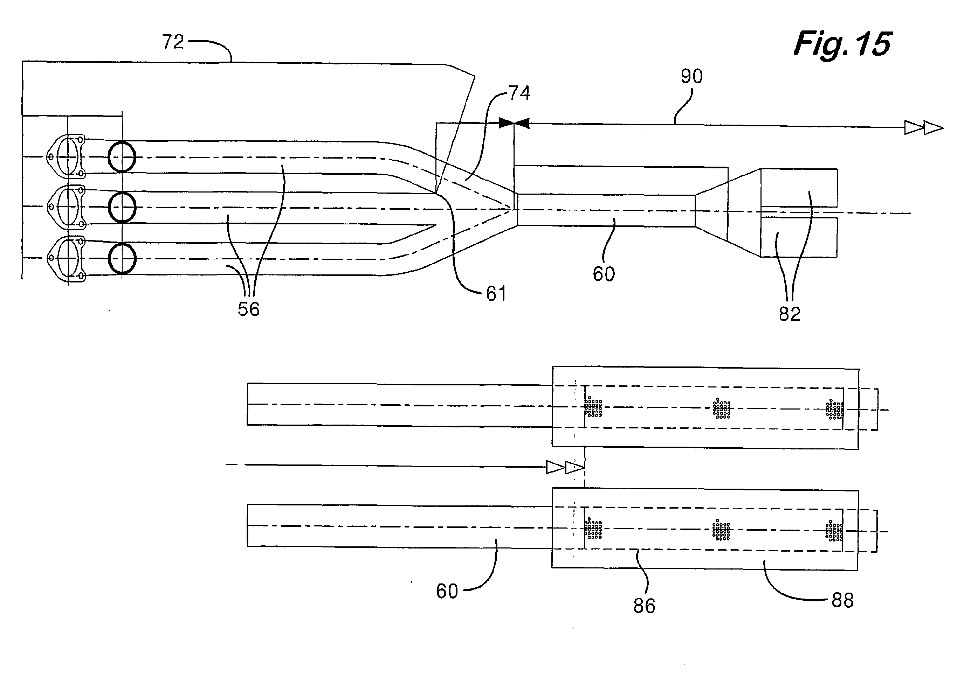

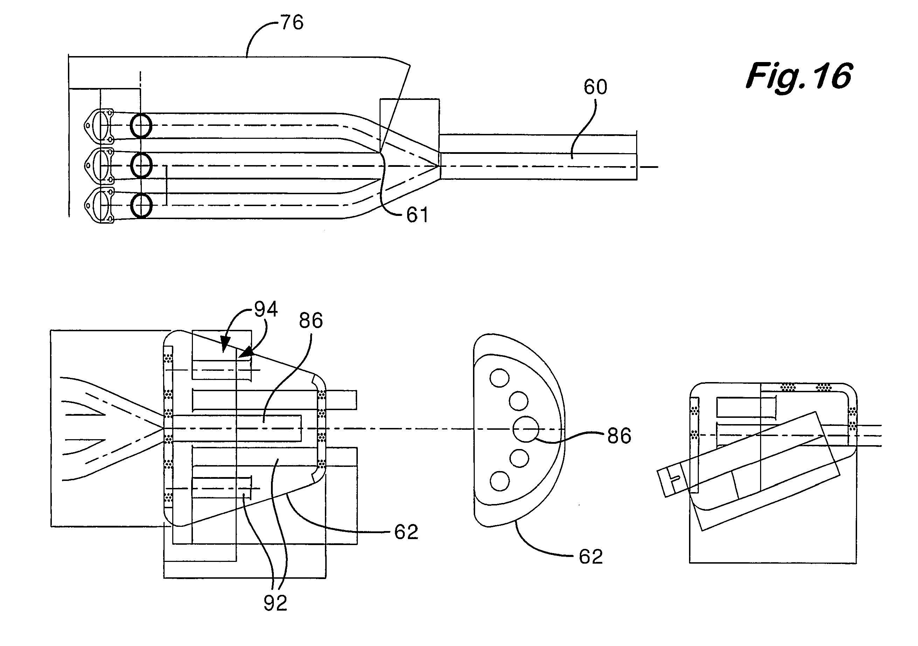

The length of the primary exhaust pipes 56, from exhaust headers 70 (see Figure 13) mounted on the engine to the secondary pipe 60, is determined by a performance specification of the engine. As shown in Figure 15, in one embodiment, suitable for an engine with a peak power at 13500 rpm, the centre line length 72 from the exhaust output ports, which are connected to the exhaust headers 70, to the "gas join" 61 (the point at which the primary exhaust pipes 56 converge) is 450 mm. In another embodiment, shown in Figure 16, suitable for an engine with a peak power at 12000 rpm, the centre line length 76 is 542 mm in length.

The primary exhaust pipes 56 are designed to each have the same length in order to ensure that the exhaust gases arrive at the secondary pipe 60 in such a way so as to ensure that there is no back pressure generated by the cylinders sharing the secondary pipe 60. Specifically, each pulse of exhaust gas from each cylinder must arrive at the gas join at the right time relative to the preceding and succeeding pulses from the other cylinders. Thus, the multiple convolutions of the primary exhaust pipes 56 are necessary in order to ensure that they fit snugly against the seat bearing member 66 while still having the required identical length 72, 76.

With reference once again to Figure 13, a heat shield plate 78 (shown in dotted outline) is connected to mounting bosses 80. The heat shield 78 shields the seat bearing member 66 and hence the rider from heat radiating from the primary exhaust pipes 56.

As can be seen in Figure 13, the heat shield plate 78 tapers towards the rear end of the motorcycle 2 and partially wraps around the primary exhaust pipes 56 where they join the secondary pipe 60. The heat shield plate 78 is moulded carbon-fibre and is heat resistant Kevlar^{™} backed Gentex^{™}. The Gentex^{™} is co-cured with the carbon fibre.

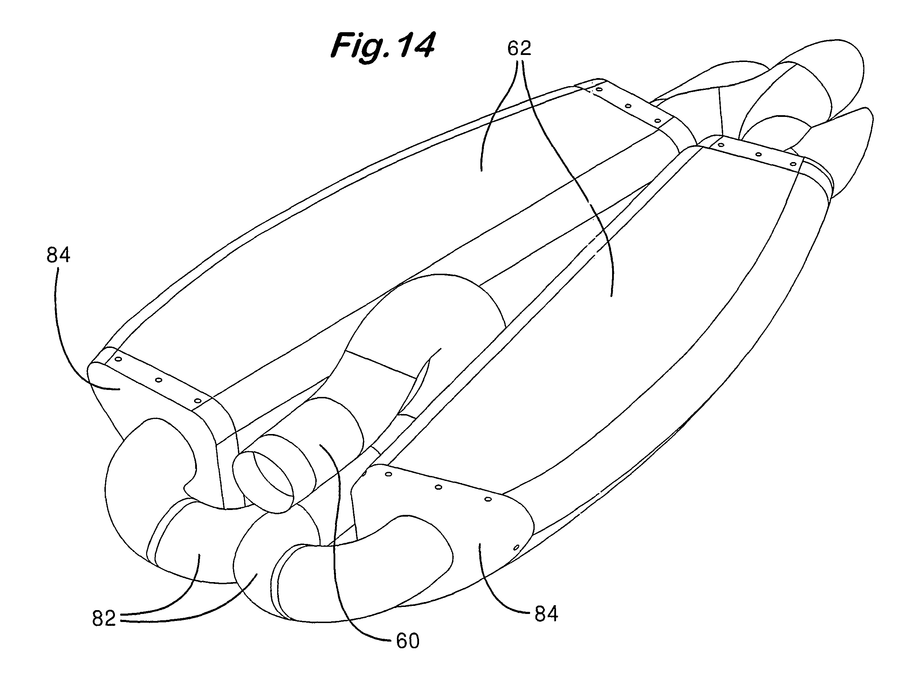

With reference to Figures 13 and 14, the secondary exhaust pipe folds back on itself and runs a short distance towards the front of the motorcycle 2, before diverging into two separate tertiary pipes 82 which pass through apertures in end plates 84 of each respective muffler 62. In one embodiment, the length of the secondary exhaust pipe 60 is 338 mm, with an outside diameter of 50.8 mm.

The housings of the mufflers 62 are moulded from a carbon fibre composite material which is co-cured with a Gentex^{™} heat shielding in order to achieve a required aerodynamic shape suitable for conforming with the streamlined aerodynamic shape of the rear portion of the seat bearing member 66. The outer walls of the mufflers 62 may also include a Kevlar ™ backing layer In a further embodiment, intended for a higher performance motorcycle, the housings are formed of a titanium alloy.

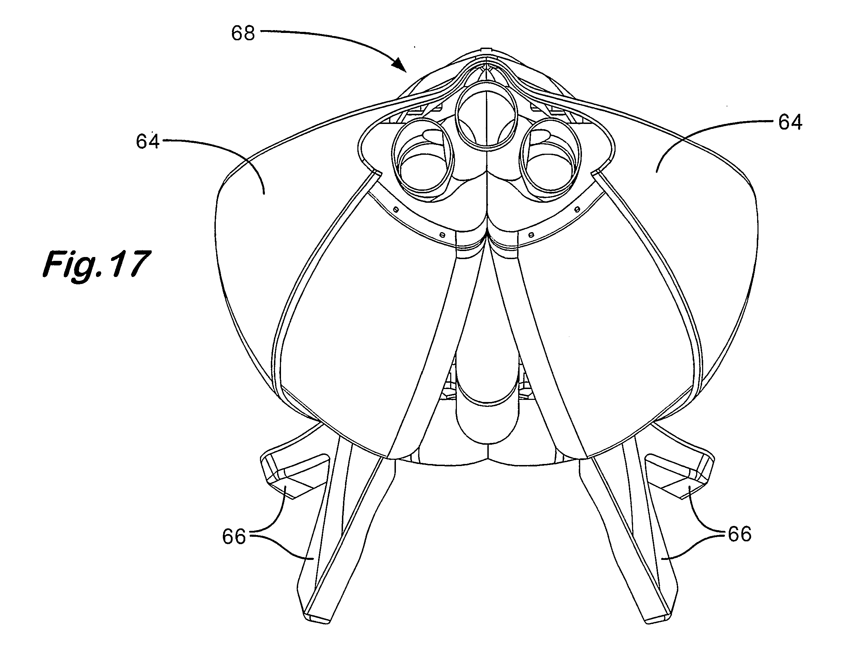

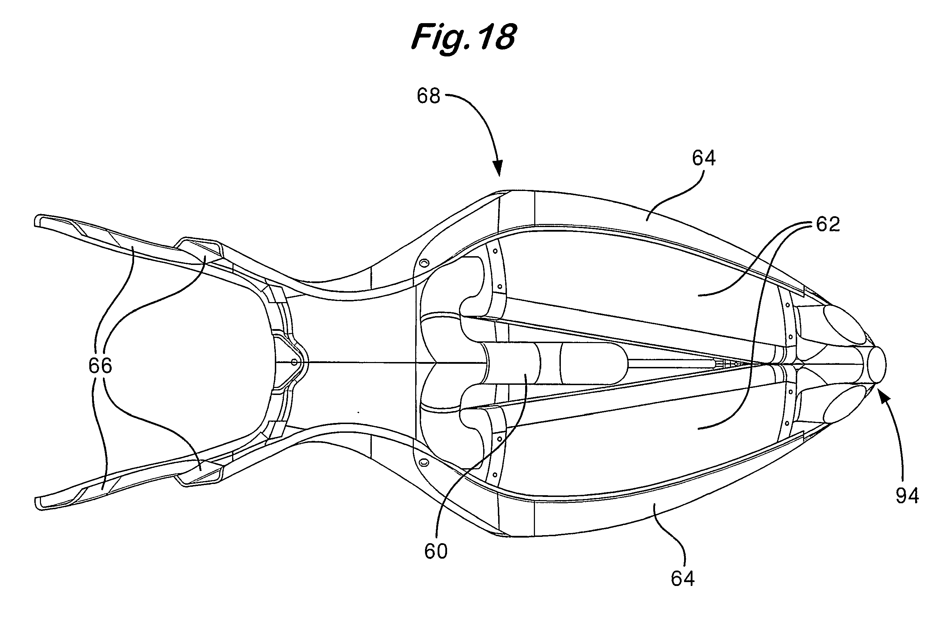

With reference in particular to Figure 18, it can be seen how the shape of the housings of the mufflers 62, in plan view, conform to the tapered aerodynamic line of the tail portion 68. Furthermore, as can be seen in Figures 17 and 18, a rear fairing 64 is connected to the tail portion 68, and the mufflers 62 are shaped to be enclosed above and to the sides by said fairing 64.

With reference to Figure 15, each of the tertiary pipes 82 enter a respective glass pack muffler 62 which uses absorption to reduce sound. Thus, as shown, each of the pipes 86 within the mufflers are perforated and pass through the bores of each respective muffler 62. Surrounding each pipe is a layer of absorbent fibre-glass insulation 88. Thus, the exhaust passes straight through each internal pipe 86 and the pressure pulses in the exhaust gas, which cause the exhaust noise, are at least partially absorbed as the exhaust gas expands within the mufflers 62 as they travel along each pipe 86. The perforated portions of each of the pipes 86 are covered in a meshing. In this way, noise is attenuated to about 102 dB.

In such an embodiment, the centre line length 90, from the "gas join" to the start of the perforations in the internal exhaust pipes 86 is 618 mm in length.

In another embodiment, as shown schematically in Figure 16, a single muffler 62 is provided and the secondary exhaust pipe 60 does not diverge into tertiary pipes before entering the muffler. In this arrangement a combination of tubes 92 and baffled chambers 94 are used to cancel out at least in part the pressure pulses in the exhaust gas and hence reduce the exhaust noise.

In such an embodiment the single muffler is approximately 320 mm in length. The inside walls of this muffler are covered with a perforated sheet screen with stainless steel wire-wool which helps dissipate heat and which improved high frequency loss. Noise in this muffler is attenuated to approximately 86 dB.

In one embodiment the muffler is mounted with a minimum of 25 mm of clearance between its upper surface and the lower surface of the seat bearing member 66, thereby to accommodate a fibreglass heat shield (in the form of a fibreglass Durablanket^{™}, which is 20 mm thick.

The exhaust piping is typically manufactured from grade 304 stainless steel, while an end pipe arrangement 94 (see Figure 18, for example) is manufactured using grade 306 stainless steel as it is more susceptible to wear and tear.

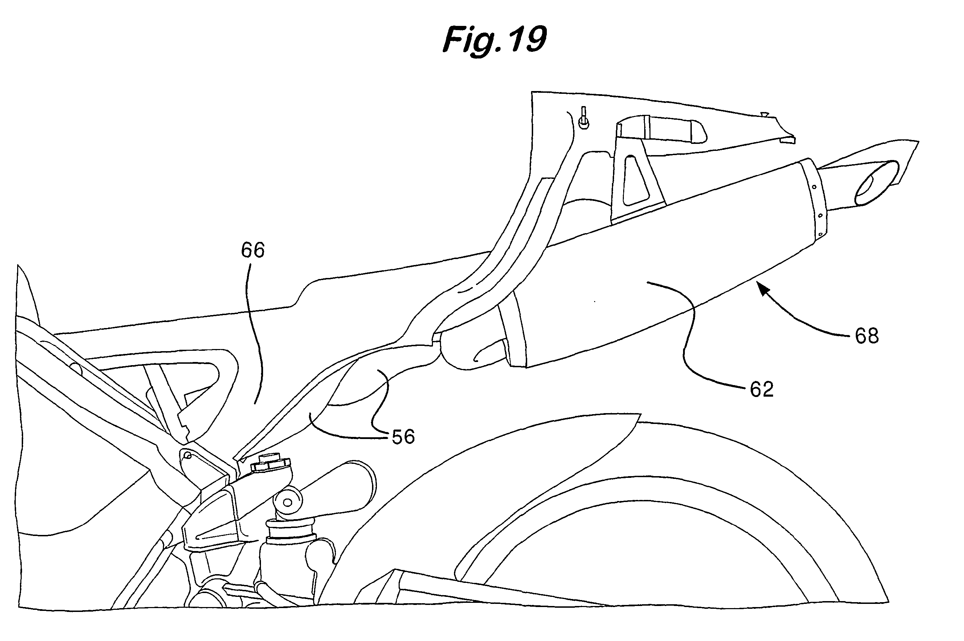

Figure 19 shows the exhaust system described above (particularly with reference to Figure 13) installed on a motorcycle. The primary exhaust pipes 56 extend rearwards from the engine (not visible in this Figure) in close proximity to the seat-bearing member 66 to the mufflers 62 in the tail portion 68 of the motorcycle.

With reference to this Figure and Figure 1, it may be seen that at the rear of the motorcycle, the profile area is small. Instead of a cluttered assembly of exhaust pipes, mufflers, suspension components, seats and other structural components, the primary exhaust pipes 56 closely follow the single piece seat-carrying member 66 from the backward facing exhaust headers to the mufflers 62 which are situated within the tail portion of the motorcycle. Not only is the side area of the rear of the motorcycle very small, but the rear fairing and exhaust assembly are both carefully designed to minimise undesirable aerodynamic side forces. In particular, to reduce turning forces on the motorcycle, the side area behind the axle of the rear wheel is small.

While from the point of view of reducing drag in a longitudinal direction, the tail assembly would ideally fill the low pressure void behind the rider and fair down to a point, this would result in the tail having a huge side area resulting in extremely large side forces. Instead in the described embodiment, there is a void behind the rider in order to minimise the profile area which significantly improves handling, particularly in cross-winds.

Furthermore, the rear fairing 64 and the silencers 62 are shaped so formed to minimise rear lift as well as side forces. Features of note are the smooth contours and the fact that the assembly as a whole ends in a point in both plan and profile.

## Claims

1. A motorcycle having an air intake path (18, 20, 22, 24) for providing air to an engine (4) via an aperture (A) adjacent the front of the motorcycle, the path being substantially linear from the aperture to an airbox (26) into which opens an air intake (8) of the engine (4), the air intake (4) being mounted on a substantially forward-facing surface of the engine, (4) wherein the intake path comprises a divergent portion (BC), **characterized in that** the divergent portion diverges with an equivalent cone angle of between 5° and 10°.

2. A motorcycle according to Claim 1, having only one cylinder or only one bank of cylinders.

3. A motorcycle according to Claim 1, wherein the longitudinal axis of the or each cylinder is inclined towards the rear of the motorcycle.

4. A motorcycle according to Claim 3, wherein the axis is inclined rearwards by between 10° and 20°, preferably between 13° and 15°.

5. A motorcycle according to any of the preceding claims, wherein the intake path comprises a convergent portion adjacent an upstream end of the path.

6. A motorcycle according to any preceding claim, comprising a plurality of cylinders and a separate air intake for each cylinder of the engine.

7. A motorcycle according to any preceding claim, wherein the divergent portion diverges with an equivalent cone angle of 7°.

8. A motorcycle according to any of the preceding claims, wherein the intake path passes through a headstock of the motorcycle.

9. A motorcycle according to Claim 8 wherein the headstock forms part of the divergent portion of the intake path.

10. A motorcycle according to Claim 8 or Claim 9, wherein the headstock comprises an aerodynamic fairing around a steering pin of the motorcycle.

11. A motorcycle according to any of the preceding claims, wherein the aperture is located at a point of highest incident pressure when the motorcycle is in substantially linear motion.

12. A motorcycle according to any of the preceding claims, wherein the airbox has a volume of greater than 5 litres.

13. A motorcycle according to Claim 12, wherein the airbox has a volume of greater than 7.5 litres.

14. A motorcycle according to Claim 12, wherein the airbox has a volume of greater than 10 litres.

15. A motorcycle according to Claim 12, wherein the airbox has a volume of 12 litres.

16. A motorcycle according to any of the preceding claims, comprising an exhaust header per cylinder of the engine, mounted on a substantially rearward-facing surface of the engine, the header feeding an exhaust duct which runs from the engine to a muffler, the exhaust duct being located for substantially the whole of its length adjacent a seat of the motorcycle.

## Patentansprüche

1. Motorrad mit einem Lufteinlassweg (18, 20, 22, 24) zum Zuführen von Luft zu einem Motor (4) über eine Öffnung (A) benachbart der Front des Motorrads, wobei der Weg von der Öffnung zu einem Luftbehälter (86) im Wesentlichen linear verläuft, in den sich ein Lufteinlass (8) des Motors (4) öffnet, wobei der Lufteinlass (4) auf einer im Wesentlichen nach vorne weisenden Oberfläche des Motors (4) angeordnet ist, wobei der Einlassweg einen divergenten Abschnitt (B-C) umfasst, **dadurch gekennzeichnet, dass** der divergente Abschnitt mit einem äquivalenten Kegelwinkel zwischen 5° und 10° divergiert.

2. Motorrad nach Anspruch 1 mit nur einem Zylinder oder mit nur einer Zylinderreihe.

3. Motorrad nach Anspruch 1, bei dem die Längsachse von dem oder von jedem Zylinder in Richtung des Hecks des Motorrads geneigt ist.

4. Motorrad nach Anspruch 3, bei dem die Achse nach hinten zwischen 10° und 20°, vorzugsweise zwischen 13° und 15°, geneigt ist.

5. Motorrad nach einem der vorhergehenden Ansprüche, bei dem der Einlassweg einen konvergenten Abschnitt benachbart einem stromaufwärtigen Ende des Weges umfasst.

6. Motorrad nach irgendeinem vorhergehenden Anspruch mit einer Vielzahl von Zylindern und einem separaten Lufteinlass für jeden Zylinder des Motors.

7. Motorrad nach irgendeinem vorhergehenden Anspruch, bei dem der divergierte Abschnitt mit einem äquivalenten Kegelwinkel von 7° divergiert.

8. Motorrad nach einem der vorhergehenden Ansprüche, bei dem der Einlassweg durch ein Kopfstück des Motorrads verläuft.

9. Motorrad nach Anspruch 8, bei dem das Kopfstück ein Teil des divergenten Abschnitts des Einlasswegs bildet.

10. Motorrad nach Anspruch 8 oder Anspruch 9, bei dem das Kopfstück eine aerodynamische Verkleidung um einen Lenker des Motorrads umfasst.

11. Motorrad nach einem der vorhergehenden Ansprüche, bei dem die Öffnung an einem Punkt höchsten Aufpralldrucks angeordnet ist, wenn sich das Motorrad in einer im Wesentlichen linearen Bewegung befindet.

12. Motorrad nach einem der vorhergehenden Ansprüche, bei dem der Luftbehälter ein Volumen von mehr als 5 Litern aufweist.

13. Motorrad nach Anspruch 12, bei dem der Luftbehälter ein Volumen von mehr als 7,5 Litern aufweist.

14. Motorrad nach Anspruch 12, bei dem der Luftbehälter ein Volumen von mehr als 10 Litern aufweist.

15. Motorrad nach Anspruch 12, bei dem der Luftbehälter ein Volumen von 12 Litern aufweist.

16. Motorrad nach einem der vorhergehenden Ansprüche mit einem Abgaskopf pro Zylinder des Motors, der an einer im Wesentlichen nach hinten weisenden Oberfläche des Motors angeordnet ist, wobei der Kopf eine Abgasleitung versorgt, die von dem Motor zu einem Schalldämpfer verläuft, wobei die Abgasleitung angeordnet ist, um im Wesentlichen über ihre gesamte Länge benachbart zu einem Sitz des Motorrads zu sein.

## Revendications

1. Motocycle possédant un passage d'admission d'air (18, 20, 22, 24) pour fournir de l'air à un moteur (4) par l'intermédiaire d'une ouverture (A) adjacente à la partie avant du motocycle, le passage étant sensiblement linéaire à partir de l'ouverture jusqu'à une boîte à vent (26) sur laquelle donne une admission d'air (8) du moteur (4), l'admission d'air (4) étant montée sur une surface tournée sensiblement vers l'avant du moteur (4), dans lequel le passage d'admission comprend une partie divergente (B-C), **caractérisée en ce que** la partie divergente diverge avec un angle conique équivalent compris entre 5° et 10°.

2. Motocycle selon la revendication 1, possédant seulement un cylindre ou seulement un banc de cylindres.

3. Motocycle selon la revendication 1, dans lequel l'axe longitudinal du ou de chaque cylindre est incliné vers l'arrière du motocycle.

4. Motocycle selon la revendication 3, dans lequel l'axe est incliné vers l'arrière selon un angle compris entre 10° et 20°, de préférence entre 13° et 15°.

5. Motocycle selon l'une quelconque des revendications précédentes, dans lequel le passage d'admission comprend une partie convergente adjacente à une extrémité amont du passage.

6. Motocycle selon une quelconque revendication précédente, comprenant une pluralité de cylindres et une admission d'air séparée pour chaque cylindre du moteur.

7. Motocycle selon une quelconque revendication précédente, dans lequel la partie divergente diverge avec un angle conique équivalent de 7°.

8. Motocycle selon l'une quelconque des revendications précédentes, dans lequel le passage d'admission passe à travers une tête du motocycle.

9. Motocycle selon la revendication 8, dans lequel la tête fait partie de la partie divergente du passage d'admission.

10. Motocycle selon la revendication 8 ou la revendication 9, dans lequel la tête comprend un carénage aérodynamique autour d'un axe de fusée du motocycle.

11. Motocycle selon l'une quelconque des revendications précédentes, dans lequel l'ouverture est positionnée à un point de pression incidente la plus élevée lorsque le motocycle est en mouvement sensiblement linéaire.

12. Motocycle selon l'une quelconque des revendications précédentes, dans lequel la boîte à vent possède un volume supérieur à 5 litres.

13. Motocycle selon la revendication 12, dans lequel la boîte à vent possède un volume supérieur à 7,5 litres.

14. Motocycle selon la revendication 12, dans lequel la boîte à vent possède un volume supérieur à 10 litres.

15. Motocycle selon la revendication 12, dans lequel la boîte à vent possède un volume de 12 litres.

16. Motocycle selon l'une quelconque des revendications précédentes, comprenant une tubulure d'échappement pour chaque cylindre du moteur, montée sur une surface tournée sensiblement vers l'arrière du moteur, la tubulure fournissant une conduite d'échappement qui va du moteur au pot d'échappement, la conduite d'échappement étant positionnée pour sensiblement la totalité de sa longueur de façon adjacente à un siège du motocycle.
